# EUROPÄISCHE PATENTSCHRIFT

(11) **EP 1 807 297 B1**
(45) Veröffentlichungstag und Bekanntmachung des Hinweises auf die Patenterteilung: **11.06.2008**
(21) Anmeldenummer: 06722471.7
(22) Anmeldetag: 09.02.2006
(51) Int. Cl.: B62D 1/06, B62D 1/10, B62D 1/04, B62D 1/08

(54) **LENKRAD FÜR EIN KRAFTFAHRZEUG**
STEERING WHEEL FOR A MOTOR VEHICLE
VOLANT POUR UN VEHICULE AUTOMOBILE

(30) Priorität: 08.04.2005 DE 102005017076
(43) Veröffentlichungstag der Anmeldung: 18.07.2007
(73) Patentinhaber: TAKATA - PETRI AG, 63743 Aschaffenburg (DE)
(72) Erfinder: MARKFORT, Dieter, 13088 Berlin (DE)
(74) Vertreter: Baumgärtel, Gunnar
(86) Internationale Anmeldenummer: PCT/DE2006/000219
(87) Internationale Veröffentlichungsnummer: WO 2006/105745

(56) Entgegenhaltungen:
- US-A- 3 726 152
- US-A- 4 547 655

## Beschreibung

Die Erfindung betrifft ein Lenkrad für ein Kraftfahrzeug gemäß dem Oberbegriff des Anspruchs 1.

Ein derartiges Lenkrad ist um eine Lenkachse drehbar am Kraftfahrzeug zu lagern und umfasst als wesentliches Element einen Lenkradkranz zum Betätigen des Lenkrades, der sich entlang einer die Lenkachse umlaufenden Umfangsrichtung erstreckt und einen senkrecht zur Umfangsrichtung orientierten Querschnitt aufweist. Zur Veränderung des Querschnittes variiert zumindest entlang eines Teiles des Lenkradkranzes die räumliche Orientierung einer vorgegebenen Querschnittskontur entlang der Umfangsrichtung in Bezug auf die Lenkachse. Unter der Querschnittskontur wird hierbei eine Umrandung des Querschnitts verstanden.

Es ist bekannt, dass sich bei derartigen Lenkrädern der Querschnitt des Lenkradkranzes entlang der Umfangsrichtung des Lenkradkranzes verändert, siehe DE1010393. Dabei weist der Lenkradkranz entlang seiner Umfangsrichtung Abschnitte auf, deren Querschnittsflächen im Vergleich zu den Querschnittflächen angrenzender Abschnitte des Lenkradkranzes größer bzw. kleiner sind.

Aus der US-A-4 547 655 ist ein Lenkrad für ein Kraftfahrzeug bekannt, das um eine Lenkachse drehbar am Kraftfahrzeug lagerbar ist und das einen Lenkradkranz aufweist, der sich entlang einer die Lenkachse umlaufenden Umfangsrichtung erstreckt und einen sich entlang der Umfangsrichtung verändernden Querschnitt aufweist. Zur Veränderung des Querschnitts variiert entlang eines Teils des Lenkradkranzes die räumliche Orientierung der vorgegebenen Querschnittskontur entlang der Umfangsrichtung in Bezug auf die Längsachse.

In der US-A-3 726 152 wird ein Lenkrad für ein Kraftfahrzeug beschrieben, das um eine Lenkachse drehbar am Kraftfahrzeug lagerbar ist. Das Lenkrad weist einen Lenkradkranz auf, beim dem sich eine Querschnittsveränderung durch eine Verjüngung des Querschnitts ergibt.

Der Erfindung liegt das Problem zu Grunde, ein Lenkrad der eingangs genannten Art mit einer verbesserten Handhabbarkeit bereitzustellen.

Dieses Problem wird durch ein Lenkrad für ein Kraftfahrzeug mit den Merkmalen des Anspruchs 1 gelöst.

Danach ist vorgesehen, dass sich die räumliche Orientierung der Querschnittskontur bei konstanter Querschnittskontur entlang der Umfangsrichtung des Lenkradkranzes ändert, wobei die Querschnittskontur als eine längliche, geschlossene Kontur mit einer Längsachse ausgebildet ist, beispielsweise als ein Oval oder eine Ellipse. Die Lage der Längsachse im Raum definiert dabei die Orientierung der Querschnittskontur im Raum. Weiterhin ist erfindungsgemäß vorgesehen, dass die Längsachse der länglichen Querschnittskontur bei einem Lenkrad in einer Geradeausfahrtstellung - bezogen auf einen in ein Kraftfahrzeug eingebauten Zustand des Lenkrades - einen ersten Winkel mit der Lenkachse einschließt. Der Betrag des ersten Winkels hängt dabei von der Lage des Querschnitts des Lenkradkranzes entlang der Umfangsrichtung des Lenkradkranzes ab, und zwar derart, dass er ausgehend von einem obersten Bereich des Lenkradkranzes (bezogen auf die vertikale Fahrzeugachse) entlang der Umfangsrichtung des Lenkradkranzes anwächst, bis er - etwa auf einer halben Höhe zwischen dem obersten und einem untersten Bereich (bezogen auf die vertikale Fahrzeugachse) des Lenkradkranzes - einen maximalen Wert erreicht.

Hierdurch ist auf einfache Weise die Form des Lenkradkranzes entlang einer Umfangsrichtung des Lenkradkranzes derart veränderbar, dass der Lenkradkranz in jeder Griffposition einer natürlichen Griffhaltung der Hände eines Fahrers angepasst ist.

Allgemein kann sich der Querschnitt eines Lenkradkranzes entlang des Lenkradkranzes, d.h., senkrecht zu dessen Umfangsrichtung, ändern, indem er seine Form oder seine Orientierung im Raum ändert. Dies ist gleichbedeutend mit einer Änderung der Querschnittskontur selbst bzw. einer Änderung der Orientierung der Querschnittskontur im Raum, bei konstanter, d.h., unveränderter Form der Querschnittskontur an sich. Vorzugsweise erfolgt die Veränderung der Orientierung der Querschnittskontur des Lenkradkranzes kontinuierlich entlang der Umfangsrichtung des Lenkradkranzes. Das der Querschnitt bzw. die Querschnittskontur eine Orientierung im Raum aufweist, setzt voraus, dass die Querschnittskontur in Bezug auf die Umfangsrichtung des Lenkradkranzes keine kontinuierliche Rotationssymmetrie aufweist. Es ist natürlich auch möglich, dass sich Form und Orientierung einer Querschnittskontur gleichzeitig ändern. Zudem kann sich die Fläche eines Querschnitts bei ansonsten konstanter Form der zugehörigen Querschnittskontur ändern (Skalierung des Querschnitts).

Bevorzugt ändert sich die räumliche Orientierung der Querschnittskontur des Lenkradkranzes lediglich entlang eines Teiles des Lenkradkranzes. Bei einem derartigen Teil des Lenkradkranzes kann es sich - bezogen auf eine Geradeausfahrtstellung des Lenkrades - beispielsweise um eine obere Hälfte eines in sich geschlossenen Lenkradkranzes handeln.

In einer weiteren Variante der Erfindung verändert sich die räumliche Orientierung der Querschnittskontur entlang des gesamten Lenkradkranzes, wobei Bereiche des Lenkradkranzes ausgenommen sein können, an denen Speichen des Lenkrades, die zur Verbindung einer Nabe des Lenkrades mit dem Lenkradkranz dienen, in den Lenkradkranz übergehen.

Weiterhin variiert die Orientierung der Querschnittskontur entlang der Umfangsrichtung des Lenkradkranzes vorzugsweise bei konstanter Fläche des Querschnittes.

Vorzugsweise nimmt der erste Winkel ausgehend von seinem maximalen Wert, den er etwa auf halber Höhe zwischen dem obersten und dem untersten Bereich des Lenkradkranzes erreicht, entlang der Umfangsrichtung zum untersten Bereich des Lenkradkranzes hin ab.

Mit Vorteil weist der Lenkradkranz an seinem obersten Bereich eine längliche Querschnittskontur auf, deren Längsachse mit der Lenkachse einen ersten Winkel von 0° einschließt, d.h., die Längsachse verläuft parallel zur Lenkachse. Hierdurch ist eine Sichtbehinderung des Fahrers durch den Lenkradkranz vermindert, da sich die Längsachse der Querschnittskontur im Wesentlichen entlang der Geradeausblickrichtung des Fahrers erstreckt, so dass diesem entlang seiner Geradeausblickrichtung lediglich eine sich quer zur Längsachse erstreckende schmale Oberseite des oberen Bereichs des Lenkradkranzes zugewandt ist.

Ebenso weist der Lenkradkranz bevorzugt an seinem untersten Bereich eine längliche Querschnittskontur auf, deren Längsachse mit der Lenkachse ebenfalls einen ersten Winkel von 0° einschließt. Der unterste Bereich bildet hierdurch eine bequeme Auflagefläche für die Hände eines Fahrers aus.

In einer weiteren bevorzugten Ausführungsform der Erfindung weist der Lenkradkranz in einer Geradeausfahrtstellung des Lenkradkranzes - bezogen auf einen in ein Lenkrad eingebauten Zustand des Lenkrades - auf der halben Höhe zwischen dem obersten und dem untersten Bereich des Lenkradkranzes eine Querschnittskontur auf, deren Längsachse mit der Lenkachse einen ersten Winkel von 45° einschließt. Dies ist vorteilhaft, da der Lenkradkranz im Bereich der vorstehenden Querschnittskontur besonders häufig beim Lenken des Kraftfahrzeuges (auf beiden Seiten der Lenkachse des Lenkrades entlang der Fahrzeugquerachse) umgriffen wird, wobei aufgrund des ersten Winkels von 45° eine natürliche Griffposition der Hände eines Fahrers möglich ist, bei der die Handgelenke nicht übermäßig angewinkelt werden müssen. Zudem entspricht die längliche Querschnittskontur in diesem Bereich des Lenkradkranzes etwa derjenigen Kontur, die der Daumen und der Zeigefinger eines Fahrers bei einer entspannten Griffhaltung einer Hand bilden.

Vorzugsweise umläuft der Lenkradkranz in sich geschlossen die Lenkachse. Die Außenkontur des Lenkradkranzes weist dabei bevorzugt entlang einer senkrecht auf der Lenkachse stehenden Richtung einen Abstand zur Lenkachse auf, der - bezogen auf eine Geradeausfahrtstellung des Lenkrades in einem in ein Kraftfahrzeug eingebauten Zustand - entlang der vertikalen Fahrzeugachse oberhalb der Lenkachse größer ist als unterhalb der Lenkachse. Bevorzugt ist der Abstand zwischen der Außenkontur des Lenkradkranzes und der Lenkachse sowie der Radius der Außenkontur entlang einer senkrecht auf der Lenkachse stehenden Richtung in einem Bereich, der sich von einem Fahrer aus betrachtet entlang des in sich geschlossenen Lenkradkranzes von der 8 Uhr-Position im Uhrzeigersinn zur 4 Uhr-Position erstreckt, annähernd konstant. Dieser Bereich geht beiderseits der Lenkachse über in eine parallel zur Fahrzeugquerachse verlaufende Abflachung des Lenkradkranzes mit einem geringeren Abstand zur Lenkachse. Auf diese Weise lässt sich der Bewegungsfreiraum für den Fahrer eines Kraftfahrzeuges unterhalb des Lenkradkranzes (bezogen auf die vertikalen Fahrzeugachse) vorteilhaft vergrößern. Zudem verleiht ein solchermaßen abgeflachter Lenkradkranz dem Lenkrad ein besonderes, sportliches Aussehen.

In einer weiteren Variante der Erfindung ist ein sich entlang der Umfangsrichtung erstreckender Abschnitt des Lenkradkranzes vorgesehen, mit einem senkrecht zur Umfangsrichtung orientierten Querschnitt, der eine längliche, geschlossenen Querschnittskontur mit einer Längsachse aufweist, die mit der Lenkachse einen ersten Winkel einschließt.

Vorzugsweise ist der Abschnitt derart verstellbar ausgebildet, dass der erste Winkel einstellbar ist. Hierzu ist der Abschnitt des Lenkradkranzes bevorzugt manuell verstellbar ausgebildet. Bei einem derartigen Abschnitt eines Lenkradkranzes kann es sich beispielsweise um Abschnitte des Lenkradkranzes handeln, die - bezogen auf eine Geradeausfahrtstellung des Lenkrades in einem in ein Kraftfahrzeug eingebauten Zustand des Lenkrades - zu beiden Seiten (entlang der Fahrzeugquerachse) eines Nabenkörpers des Lenkrades angeordnet sind. Entlang der Umfangsrichtung weisen derartige verstellbare Abschnitte zumindest die Breite einer Hand eines Fahrers auf.

Vorzugsweise ist ein solcher Abschnitt des Lenkradkranzes zumindest zwischen einer ersten und einer zweiten Stellung, mit jeweils verschiedenen Werten des ersten Winkels, manuell verstellbar ausgebildet. In den beiden Stellungen kann der einstellbare Abschnitt jeweils lösbar einrasten, damit er sich während der Fahrt nicht ungewollt verstellen kann.

Alternativ oder ergänzend zu einer manuellen Verstellbarkeit ist der verstellbare Abschnitt bevorzugt dazu eingerichtet und vorgesehen, zum Verstellen des ersten Winkels elektrisch und / oder hydraulisch bewegt zu werden. Betätigungselemente zum Betätigen einer derartigen automatischen Verstellung können direkt am Lenkradkranz vorgesehen sein, so dass ein Fahrer zum Verstellen eines derartigen Abschnitts des Lenkradkranzes nicht seine Hände vom Lenkrad nehmen muss.

In einer Variante der Erfindung ist vorgesehen, dass der verstellbare Abschnitt des Lenkradkranzes austauschbar am Lenkrad festgelegt ist. Hierbei kann es sich bei dem Abschnitt des Lenkradkranzes um Schalenelemente handeln, die an einem Lenkradkranzskelett als einem Grundkörper des Lenkradkranzes lösbar festlegbar sind und im festgelegten Zustand einen Teil einer das Lenkradskelett umgebenden Lenkradhülle bilden. Mit Vorteil wird hierdurch zum einen eine leichte Austauschbarkeit des verstellbaren Abschnittes im Servicefall gewährleistet, zum anderen erlaubt die Austauschbarkeit eine individuelle Anpassung des Lenkrades an Kundenwünsche hinsichtlich des Designs des Lenkrades. Es ist natürlich auch möglich derartige austauschbare Abschnitte des Lenkradkranzes ohne Verstellfunktion bereitzustellen.

Vorzugsweise weist das Lenkrad einen Nabenkörper auf, über den das Lenkrad um die Lenkachse drehbar an einem Kraftfahrzeug lagerbar ist. Zum Verbinden des L,enkradkranzes mit dem Nabenkörper ist eine erste Speiche vorgesehen. Diese ist bevorzugt entlang einer Längserstreckungsrichtung längs erstreckt ausgebildet, wobei die Längserstreckungsrichtung der ersten Speiche in einer Geradeausfahrtstellung des Lenkrades - bezogen auf eine in ein Kraftfahrzeug eingebauten Zustand des Lenkrades - im Wesentlichen parallel zur Fahrzeugquerachse orientiert ist.

In einer Variante der Erfindung verfügt die erste Speiche in einem an den Nabenkörper angrenzenden Bereich einen senkrecht zu ihrer Längserstreckungsrichtung orientierten Querschnitt, der bevorzugt eine kreisförmigen Querschnittskontur aufweist.

Weiterhin dient die erste Speiche bevorzugt als ein Träger eines Betätigungshebels zum Aktivieren und / oder Regeln einer Komponente eines Kraftfahrzeuges. Bevorzugt ragt der Betätigungshebel quer zur Längserstreckungsrichtung der ersten Speiche von der ersten Speiche ab und ist zum Aktivieren und / oder Regeln einer Komponente eines Kraftfahrzeuges um diese Längserstreckungsrichtung schwenkbar an der ersten Speiche gelagert. Derartige Betätigungshebel können beispielsweise zum Wechseln der Getriebeabstufungen im Fahrbetrieb dienen.

Vorzugsweise weist die erste Speiche in einem an den Lenkradkranz angrenzenden ersten Bereich einen senkrecht zu ihrer Längserstreckungsrichtung orientierten Querschnitt mit einer länglichen, geschlossenen Querschnittskontur auf, die eine Längsachse aufweist, die mit einer parallel zur Lenkachse verlaufenden Achse einen zweiten Winkel bildet, der weniger als 45° beträgt. Vorzugsweise beträgt der zweite Winkel 22,5°. Hierdurch verläuft die Längsachse der Querschnittskontur - bezogen auf einen in ein Kraftfahrzeug eingebauten Zustand des Lenkrades - bei Zugrundelegung üblicher Neigungswinkel der Lenkachse bezüglich der Fahrzeuglängsachse im Wesentlichen parallel zur Fahrzeuglängsachse, d.h., horizontal. Aufgrund der flach ausgebildeten Querschnittskontur der ersten Speiche in dem an den Lenkradkranz angrenzenden ersten Bereich kann sie dort insbesondere als Ablagefläche für eine Hand oder einen Bereich einer Hand eines Fahrers, beispielsweise einen Daumen, dienen. Vorzugsweise ist an einer derartigen Ablagefläche für einen Daumen eine der Form des Daumens angepassten Mulde ausgebildet.

Vorzugsweise weist das erfindungsgemäße Lenkrad eine weitere erste Speiche auf, die spiegelbildlich zur ersten Speiche am Lenkrad ausgebildet ist. Die Symmetrieebene wird hierbei bei einem Lenkrad in Geradeausfahrtstellung - bezogen auf einen in ein Kraftfahrzeug eingebauten Zustand des Lenkrades - durch die Lenkachse und eine vertikale, die Lenkachse schneidende und parallel zur vertikalen Fahrzeugachse verlaufende Fahrzeugachse aufgespannt.

In einer weiteren Variante der Erfindung ist eine zweite Speiche vorgesehen, die sich entlang einer Längserstreckungsrichtung längs erstreckt und den Lenkradkranz mit dem Nabenkörper des Lenkrades verbindet. Bevorzugt weist die zweite Speiche in einem an den Nabenkörper angrenzenden Bereich einen senkrecht zu ihrer Längserstreckungsrichtung orientierten Querschnitt mit einer kreisförmigen Querschnittskontur auf. Vorzugsweise ist an der zweite Speiche des Lenkrades ein Drehauswahlschalter zum Aktivieren und Regeln von Sicherheits- und / oder Komfortfunktionen einer Kraftfahrzeugsausstattung drehbar um die Längserstreckungsrichtung der zweiten Speiche gelagert.

Bevorzugt weist der Drehauswahlschalter eine die zweite Speiche quer zu ihrer Längserstreckungsrichtung umlaufende Betätigungsoberfläche zum Betätigen des Drehauswahlschalters auf, die vorzugsweise entlang der Längserstreckungsrichtung der zweiten Speiche stufenlos in eine äußere Oberfläche der zweiten Speiche übergeht. Hierdurch kann eine Hand eines Fahrers entlang der zweiten Speiche gleiten ohne durch ein von der Oberfläche der zweiten Speiche abstehendes Betätigungselement behindert zu werden.

Vorzugsweise ist in einem an den Lenkradkranz angrenzenden zweiten Bereich der zweiten Speiche (bzw. des Lenkradkranzes) ein senkrecht zur Längserstreckungsrichtung der zweiten Speiche orientierter Querschnitt der zweiten Speiche mit einer länglichen, in sich geschlossenen Querschnittskontur vorgesehen, die eine Längsachse aufweist, die mit einer parallel zur Lenkachse verlaufenden Achse einen dritten Winkel bildet, der bevorzugt spitz ausgebildet ist und insbesondere 45° beträgt.

In einem Ausführungsbeispiel der Erfindung ist vorgesehen, dass die erste Speiche - bezogen auf einen in ein Kraftfahrzeug eingebauten Zustand des Lenkrades - in einer Geradeausfahrtstellung des Lenkrades entlang der vertikalen Fahrzeugachse oberhalb der zweiten Speiche angeordnet ist, wobei bevorzugt die erste und die zweite Speiche vom Nabenkörper ausgehend in Richtung des Lenkradkranzes auseinanderlaufen.

Vorzugsweise weist das erfindungsgemäße Lenkrad eine weitere zweite Speiche auf, die bezüglich der Symmetrieebene des Lenkrades spiegelbildlich zur zweiten Speiche am Lenkrad ausgebildet ist.

Weiterhin ist bevorzugt eine dritte Speiche vorgesehen, die ebenfalls zum Verbinden des Nabenkörpers mit dem Lenkradkranz dient und - bezogen auf einen in ein Kraftfahrzeug eingebauten Zustand des Lenkrades - bei einer Geradeausfahrtstellung des Lenkrades entlang der Symmetrieebene des Lenkrades verläuft. Diese dritte Speiche dient vorzugsweise als ein Träger von mobilen, d.h., lösbar am Lenkrad festlegbaren Funktionseinheiten des Lenkrades, wie z.B. einem Speichermittel zum Speichern von kraftfahrzeug- und fahrzeuginsassenbezogenen Daten. Hierbei ist das Speichermittel - bezogen auf einen in ein Kraftfahrzeug eingebauten Zustand des Lenkrades - an einer einem Fahrer zugewandten Oberseite des Lenkradkranzes festlegbar, Vorzugsweise verfügt das Speichermittel über eine Funktionsoberfläche, die in einem an das Lenkrad festgelegten Zustand des Speichermittels einem Fahrer zugewandt ist. Diese Funktionsoberfläche ist bevorzugt dazu vorgesehen und eingerichtet, biometrische Merkmale eines Fahrers, beispielsweise einen Fingerabdruck oder eine iris eines Fahrers zu erfassen.

Weiterhin kann das Speichermittel durch Erkennen eines Fingerabdrucks eines Fahrers aktiviert werden, und ein Kraftfahrzeug kann durch ein Erkennen eines Fingerabdrucks eines Fahrers mittels des Speichermittels gestartet werden. Ebenso kann das Speichermittel Bedienelemente aufweisen, mit denen Sicherheits- und Komfortfunktionen einer Kraftfahrzeugsausstattung aktivier- und regelbar sind. Zum kontaktlosen Entriegeln einer Tür des Kraftfahrzeuges kann das Speichermittel z.B. ein Sendemittel umfassen. Bei dem Speichermittel handelt es sich um einen Festspeicher, vorzugsweise in Form eines USB-Memorysticks, der über eine an der dritten Speiche angeordnete Schnittstelle (USB) als Bestandteil des Lenkrades die kraftfahrzeug- und fahrzeuginsassenbezogenen Daten mit dem Kraftfahrzeug austauschen kann. Derartige Daten können eine Auswahl der folgenden Daten umfassen:
- Fahrzeug-Zugangscodes,
- Einstellungen von Parametern von Komfortfunktionen,
- Einstellungen von Parametern von Sicherheitsfunktionen
- persönliches Fahrprofil,
- Reiserouteninformationen,
- Termine,
- Fahrzeugdaten.

Weiterhin kann der Lenkradkranz Anzeigemittel zur Anzeige derartiger Daten aufweisen, die vorzugsweise bei einer Geradeausfahrtstellung des Lenkradkranzes - bezogen auf einen in ein Kraftfahrzeug eingebauten Zustand des Lenkrades - in eine dem Fahrer zugewandte Oberseite einer oberen Hälfte des Lenkradkranzes integriert sind. Ferner kann das Lenkrad einen Schaltelement aufweisen, welches zum Einstellen einer Position der Lenksäule, d.h., dem Verlauf der Lenkachse in Bezug auf die Fahrzeuglängsachse bzw. vertikale Fahrzeugachse, dient.

Weitere Merkmale und Vorteile der Erfindung werden anhand der nachfolgenden Figurenbeschreibungen von Figuren von Ausführungsbeispielen erläutert. Es zeigen:
- Figur 1:: eine Draufsicht auf ein erfindungsgemäßes Lenkrad,
- Figur 2:: eine perspektivische Ansicht des in der Figur 1 gezeigten Lenkrades,
- Figur 3-11:: jeweils einen Schnitt durch einen Lenkradkranz des in der Figur 2 dargestellten Lenkrades entlang der Linien III-III bis XI-XI,
- Figur 12:: eine Abwandlung des in der Figur 1 gezeigten Lenkrades,
- Figur 13 -17:: jeweils einen Schnitt durch einen Lenkradkranz des in der Figur 12 dargestellten Lenkrades entlang der Linien XIII-XIII bis XVII-XVII,
- Figur 18:: eine perspektivische Ansicht einer weiteren Abwandlung des in den Figuren 1 bzw. 12 gezeigten Lenkrades,
- Figur 19:: einen Schnitt durch das in der Figur 18 gezeigte Lenkrad entlang der Linie XIX-XIX,
- Figur 20:: eine Draufsicht auf das in der Figur 18 bzw. 19 gezeigte Lenkrad,
- Figur 21:: einen Schnitt durch das in der Figur 20 gezeigte Lenkrad entlang der Linie XXI-XXI,
- Figur 22:: eine Draufsicht auf ein Lenkrad der in der Figur 12 gezeigten Art, mit einem von einem Lenkradkranzskelett des Lenkrades abgenommenen Abschnitt einer Lenkradhülle des Lenkradkranzes,
- Figur 23:: eine Explosionsdarstellung eines Teiles des in der Figur 22 gezeigten Lenkradkranzskeletts, mit einem abnehmbaren Abschnitt der Lenkradhülle des Lenkradkranzes in Form zweier Schalenelemente,
- Figur 24:: ein verstellbarer Abschnitt eines Lenkradkranzes eines erfindungsgemäßen Lenkrades in einer ersten Stellung,
- Figur 25:: der in der Figur 24 gezeigte Abschnitt nach einer Verstellbewegung in eine von der ersten Stellung verschiedene zweiten Stellung,
- Figur 26:: eine perspektivische Ansicht eines Lenkrades der in der Figur 18 gezeigten Art, mit einem an einer Speiche des Lenkrades festgelegten Speichermittel,
- Figur 26A:: eine vergrößerte Darstellung des an der Speiche festgelegten Speichermittels der Figur 26,
- Figur 26B:: das aus der Speiche herausgeklappte Speichermittel der Figur 26A, und
- Figur 26C:: das aus der Speiche herausgenommene Speichermittel der Figur 26A bzw. 26B.

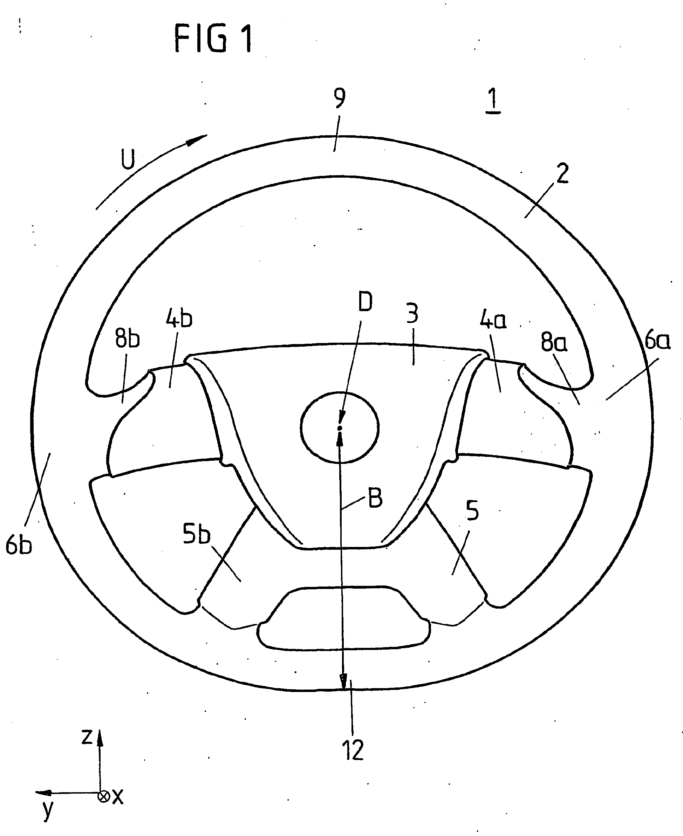

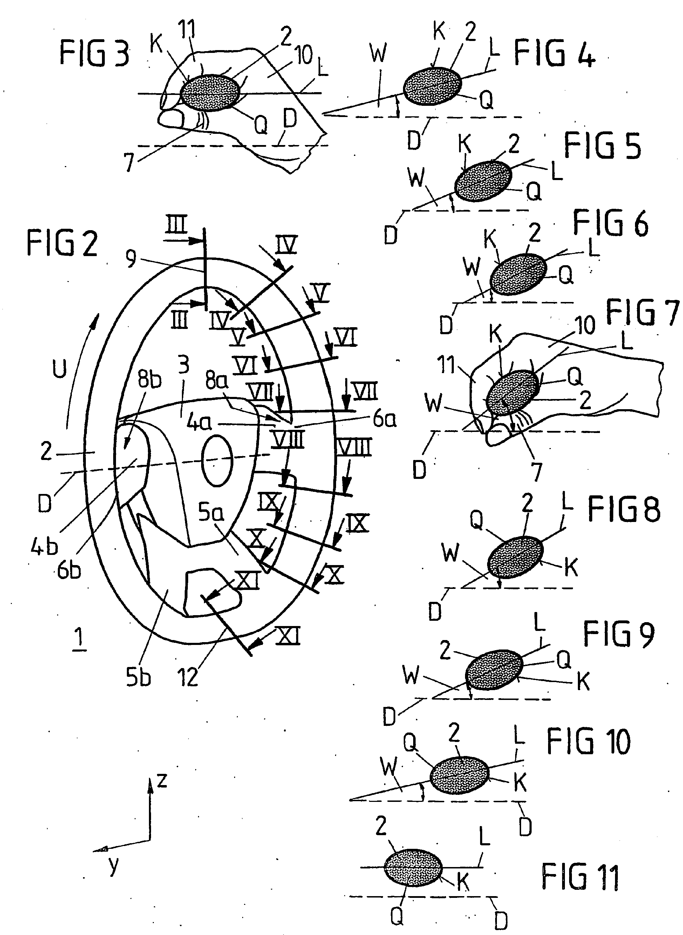

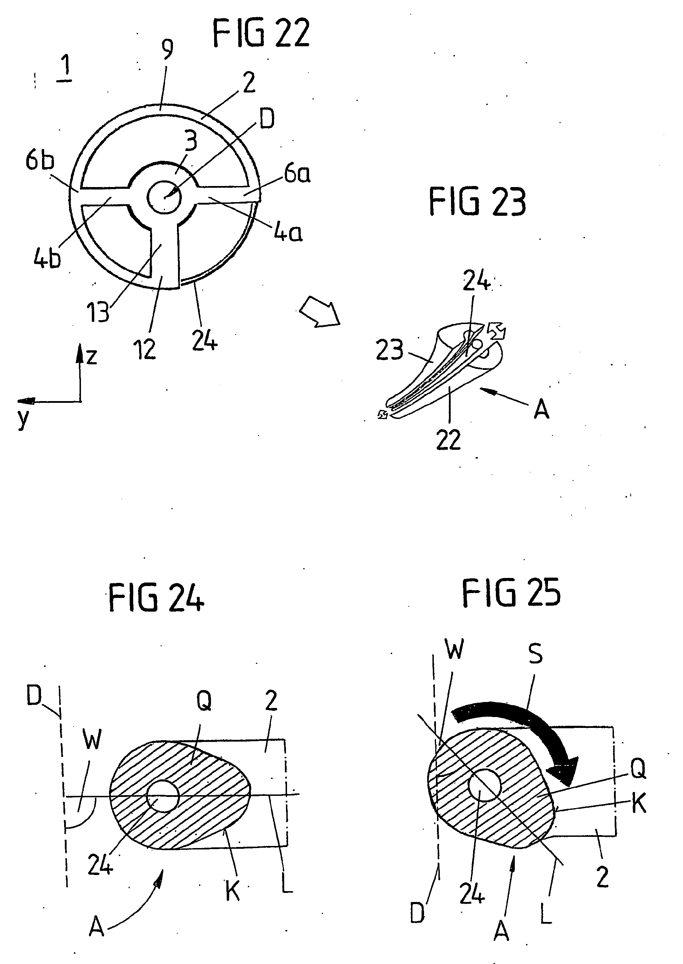

Figur 1 zeigt im Zusammenhang mit den Figuren 2 bis 11 eine Draufsicht auf ein Lenkrad 1 mit einem in sich geschlossenen Lenkradkranz 2, der sich entlang einer Umfangsrichtung U erstreckt, die eine Lenkachse D des Lenkrades 1, um die das Lenkrad 1 drehbar an einem Kraftfahrzeug lagerbar ist, quer zur Lenkachse D umläuft. Ein derartiger Lenkradkranz 2 kann als einen Grundkörper ein Lenkradkranzskelett 24 , aufweisen (vgl. Figur 22), das von einer Lenkradhülle umgeben ist. In der Regel besteht diese aus einem Schaum und kann als eine äußerste Schicht eine Ummantelung aufweisen, die beispielsweise aus Leder bestehen kann. Die Lenkachse D steht in der Figur 1 senkrecht auf der Papierebene. Im Folgenden soll stets davon ausgegangen werden, dass sich das Lenkrad 1 in einer Geradeausfahrtstellung befindet, und zwar bezogen auf einen in ein Kraftfahrzeug eingebauten Zustand des Lenkrades 1, wobei die Umfangsrichtung U aus der Sicht eines Fahrers die Lenkachse D im Uhrzeigersinn umläuft.

Die drehbare Lagerung des Lenkrades 1 an einem Kraftfahrzeug erfolgt über einen durch den Lenkradkranz 2 umlaufenen Nabenkörper 3, der über zwei erste Speichen 4a, 4b sowie über zwei zweite Speichen 5a, 5b mit dem Lenkradkranz 2 verbunden ist. Die beiden ersten Speichen 4a, 4b sind jeweils entlang einer Längserstreckungsrichtung längs erstreckt ausgebildet und stehen derart vom Nabenkörper 3 ab, das Ihre Längserstreckungsrichtungen im Wesentlichen parallel zur Fahrzeugquerachse y verlaufen. Hierbei unterteilen die beiden ersten Speichen 4a, 4b den Lenkradkranz 2 entlang der vertikalen Fahrzeugachse z annähernd in eine obere und eine untere Hälfte.

Es ist möglich, dass der Schwerpunkt des Nabenkörpers 3 entlang der Lenkachse D von einem Fahrer aus betrachtet hinter einer Erstreckungsebene angeordnet ist, in der der Lenkradkranz 2 die Lenkachse D umläuft. In diesem Fall können die beiden ersten Speichen 4a, 4b einen spitzen Winkel mit der Fahrzeugquerachse y einschließen.

Bezogen auf die vertikale Fahrzeugachse z stehen die beiden zweiten Speichen 5a, 5b, die ebenfalls jeweils entlang einer Längserstreckungsrichtung längs erstreckt ausgebildet sind, unterhalb der beiden ersten Speichen 4a, 4b vom Nabenkörper 3 ab und verlaufen von dort zur unteren Hälfte des Lenkradkranzes 2, und zwar derart, dass Sie vom Nabenkörper 3 ausgehend in Richtung der unteren Hälfte des Lenkradkranzes 2 auseinander laufen. Sowohl die beiden ersten Speichen 4a, 4b als auch die beiden zweiten Speichen 5a, 5b sind jeweils spiegelsymmetrisch zueinander in Bezug auf eine Spiegelsymmetrieebene des Lenkrades 1 aufgebaut, die durch die Lenkachse D und die vertikale Fahrzeugachse z aufgespannt wird.

per Lenkradkranz 2 des Lenkrades 1 ist entlang der vertikalen Fahrzeugachse z abgeflacht ausgebildet, d.h., der Lenkradkranz 2 weist entlang einer senkrecht auf der Lenkachse D stehenden Richtung einen Abstand B auf, der entlang der vertikalen Fahrzeugachse z unterhalb der Lenkachse D, also in der unteren Hälfte des Lenkradkranzes 2 kleiner ist als in dessen oberer Hälfte.

Häufig umgreift ein Fahrer den Lenkradkranz 2 beim Führen mit seinen Händen entlang der Fahrzeugquerachse y zu beiden Seiten des Nabenkörpers 3, d.h., an ersten Bereichen 6a, 6b des Lenkradkranzes 2, an denen die ersten Speichen 4a, 4b an einer dem Nabenkörper 3 zugewandten Innenseite des Lenkradkranzes 2 in den Lenkradkranz 2 münden. Hierbei liegen der rechte bzw. der linke Daumen 7 eines Fahrers (aus der Sicht des Fahrers) jeweils an der Innenseite des Lenkradkranzes 2 sowie an einer dem Dach des Kraftfahrzeuges zugewandeten Ablagefläche 8a der ersten Speiche 4a bzw. einer weiteren Ablagefläche 8b der weiteren ersten Speiche 4b auf, die jeweils in Form einer Mulde ausgebildet ist, die an die Form eines zum Greifen abgewinkelten Daumens 7 angepasst ist.

Der Lenkradkranz 2 des Lenkrades 1 weist senkrecht zu seiner Umfangsrichtung U einen länglichen Querschnitt Q mit einer geschlossenen Querschnittskontur K in Form eines Ovals auf. Die Querschnittskontur K weist demnach eine Orientierung im Raum auf, die durch die räumliche Orientierung einer Längsachse L der Querschnittkontur K definiert ist, die den Querschnitt Q entlang seiner länglichen Ausdehnungsrichtung halbiert. Entlang der Umfangsrichtung U des Lenkradkranzes 2 weist die Querschnittskontur K vorzugsweise eine konstante Form und der durch die Querschnittskontur K umrandete Querschnitt Q bevorzugt eine konstanter Fläche auf. Die Querschnittsfläche des Querschnittes Q kann sich aber auch entlang der Umfangsrichtung U des Lenkradkranzes 2 bei ansonsten konstanter Form der Querschnittskontur K vergrößern bzw. verkleinern. Ebenso sind kleinere Veränderungen der Form der Querschnittskontur K entlang der Umfangsrichtung U möglich, beispielsweise aufgrund von unterschiedlichen Beschichtungen des Lenkradkranzes 2 (hierunter fallen auch Verzierungen in Form von Dekorelementen usw.) oder aufgrund von im Lenkradkranz 2 integrierten Funktionselementen, wie z.B. optischen Anzeigen oder Betätigungselementen zum Steuern von Kraftfahrzeugskomponenten. Ferner ändert sich die Form des Querschnittes Q des Lenkradkranzes an denjenigen Bereichen des Lenkradkranzes 2, an denen die Speichen 4a,4b, 5a und 5b des Lenkrades 1 am Lenkradkranz 2 festgelegt sind.

Die Figuren 3 bis 11 zeigen jeweils einen Schnitt durch den Lenkradkranz'2 und zwar entlang der Linien III-III bis XI-XI der Figur 2, die das in der Figur 1 dargestellte Lenkrad 1 in einer perspektivischen Ansicht zeigt. Demnach weist der Querschnitt Q an einem entlang der vertikalen Fahrzeugachse z obersten Bereich 9 des Lenkradkranzes 2 eine Querschnittskontur K auf, deren Längsachse L gemäß der Figur 3 einen ersten Winkel W von 0° mit der Lenkachse D (gestrichelte Linie) des Lenkrades 1 einschließt, d.h., die Längsachse L der Querschnittskontur K verläuft parallel zur Lenkachse D. Hierbei ist zu beachten, dass die in den Figuren 3 bis 11 jeweils durch eine gestrichelte Linie dargestellte Lenkachse D aus Gründen einer besseren Darstellbarkeit jeweils zum Lenkradkranz 2 hin parallelverschoben ist.

Im weiteren Verlauf des Lenkradkranzes 2 entlang der Umfangsrichtung U wächst der erste Winkel W monoton im Uhrzeigersinn (von einem Fahrer aus betrachtet) an und erreicht seinen maximalen Wert von 45° entlang der vertikalen Fahrzeugachse z kurz oberhalb des ersten Bereiches 6a des Lenkradkranzes 2, an dem die erste Speiche 4a in den Lenkradkranz 2 übergeht.

Der maximale erste Winkel W von 45° ermöglicht einem Fahrer den Lenkradkranz 2 am ersten Bereich 6a so zu umgreifen, dass das entsprechende Handgelenk einer Hand 10 des Fahrers gemäß der Figur 7 bezogen auf einen Unterarm (in der Figur 7 nicht vollständig dargestellt) des Fahrers nicht abgewinkelt werden muss und daher eine entspannte Griffhaltung der Hand 10 des Fahrers ermöglicht. Die Längserstreckung der Querschnittskontur K entlang ihrer Längsachse L erlaubt dabei ein entspanntes Umgreifen des Lenkradkranzes 2 mit einem großflächigen Kontaktbereich zwischen der Hand 10 des Fahrers und dem Lenkradkranz 2. Dies liegt daran, dass der Daumen 7 und der Zeigefinger 11 einer Hand 10 in einer entspannten Griffhaltung der Hand 10 eine längliche, ovale Kontur beschreiben.

Ausgehend von seinem Maximalwert von 45° kurz oberhalb der ersten Speiche 4a nimmt der erste Winkel W zwischen der Längsachse L der Querschnittskontur K und der Lenkachse D des Lenkrades 1 entlang der Umfangsrichtung U ab, bis er an einem - bezogen auf die vertikale Fahrzeugachse z - untersten Bereich 12 des Lenkradkranzes 2 wiederum 0° beträgt.

Die durch die Lenkachse D und eine die Lenkachse D schneidende und parallel zur vertikalen Fahrzeugachse z verlaufende Fahrzeugachse aufgespannte Symmetrieebene des Lenkrades 1 schließt mit den verschiedenen, möglichen Schnittebenen des Querschnittes Q (z.B. mit den Ebenen III-III bis XI-XI der Figur 2), gemessen ausgehend vom obersten Bereich 9 des Lenkradkranzes 2, einen Winkel zwischen 0° und 360° ein, der als Lagewinkel des Querschnitts Q bezeichnet wird und von einem Fahrer aus betrachtet entlang der Umfangsrichtung U des Lenkradkranzes 2, d.h., im Uhrzeigersinn, anwächst. Vorzugsweise wächst der erste Winkel W ausgehend vom obersten Bereich 9 des Lenkradkranzes 2 (der Lagewinkel beträgt 0°) proportional zum Lagewinkel an, bis er bei einem Lagewinkel von etwa 90° (kurz oberhalb des ersten Bereiches 6a des Lenkradkranzes 2) seinen maximalen Wert von 45° annimmt. Von dort nimmt der erste Winkel W proportional zum Lagewinkel ab, bis er bei einem Lagewinkel von 180° (also am untersten Bereich 12 des Lenkradkranzes 2) wieder 0° beträgt.

Die Orientierungen der Querschnittskonturen K (Werte des erste Winkels W) desjenigen Abschnittes des Lenkradkranzes 2, der sich von einem Fahrer aus betrachtet auf der linken Seite der Symmetrieebene des Lenkrades 1 befindet, ergeben sich durch eine Spiegelung der (von einem Fahrer aus betrachtet) rechten Hälfte des Lenkradkranzes 2 an der Symmetrieebene des Lenkrades 1.

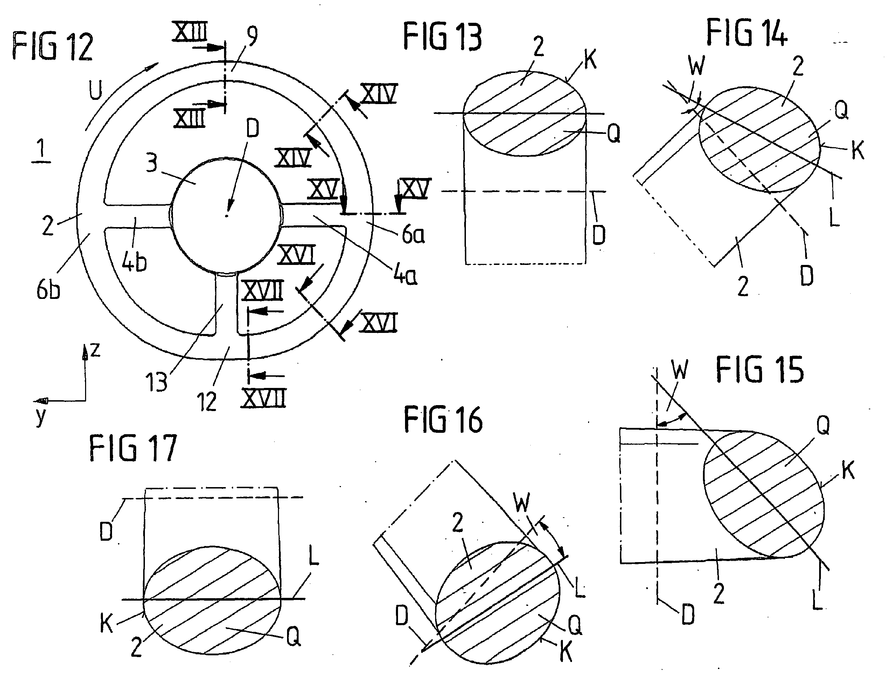

Figur 12 zeigt im Zusammenhang mit Figur 13 bis 17 eine Abwandlung des in der Figur 1 gezeigten Lenkrades 1, das im Unterschied zu dem in der Figur 1 gezeigten Lenkrad 1 statt 4 Speichen lediglich 3 Speichen aufweist, wobei die beiden zweiten Speichen 5a, 5b der Figur 1 zu einer einzigen dritten Speiche 13 zusammengefasst sind, die sich in einer Längserstreckungsrichtung längs erstreckt, die quer zur Längserstreckungsrichtung der beiden ersten Speichen 4a, 4b verläuft, so dass die drei Speichen insgesamt T-förmig angeordnet sind.

Analog zur Figur 2 verändert sich der Querschnitt Q des Lenkradkranzes 2 des Lenkrades 1 durch ein Veränderung der Orientierung der Querschnittskontur K des Querschnittes Q entlang der Umfangsrichtung U des Lenkradkranzes 2, wobei sowohl am untersten Bereich 12 des Lenkradkranzes 2, an dem die dritte Speiche 13 am Lenkradkranz 2 festgelegt ist als auch am obersten Bereich 9 des Lenkradkranzes 2 die Längsachse L der Querschnittskontur K gemäß Figur 17 bzw. Figur 13 einen ersten Winkel W mit der Lenkachse D einschließt, der vorzugsweise 0° beträgt, d.h., die Längsachse L verläuft hier jeweils parallel zu Lenkachse D.

Ebenso wird gemäß Figur 15, die einen Schnitt entlang der Linie XV-XV der Figur 13 zeigt, der maximale Wert des ersten Winkels W von vorzugsweise 45° etwa auf einer halben Höhe zwischen dem untersten Beriech 12 und dem obersten Bereich 9 des Lenkradkranzes 2 (bezogen auf die vertikale Fahrzeugachse z) erreicht.

Zwischen dem obersten Bereich 9 und dem ersten Bereich 6a des Lenkradkranzes 2 der sich auf halber Höhe zwischen dem untersten Bereich 12 und dem obersten Bereich 9 am Lenkradkranz befindet, beträgt der erste Winkel W zwischen 0 und 45 °, wobei er vorzugsweise bei einem Lagewinkel von 45° des Querschnittes Q bzw. bei einem Lagewinkel von 135° gemäß der Figur 14 bzw. 16 22, 5 ° beträgt. Das in der Figur 12 gezeigte Lenkrad 1 ist ebenfalls spiegelsymmetrisch zur Symmetrieebene des Lenkrades 1 aufgebaut, die durch die Lenkachse D und eine die Lenkachse D schneidende und parallel zur vertikalen Fahrzeugachse z verlaufende Fahrzeugachse gebildet wird.

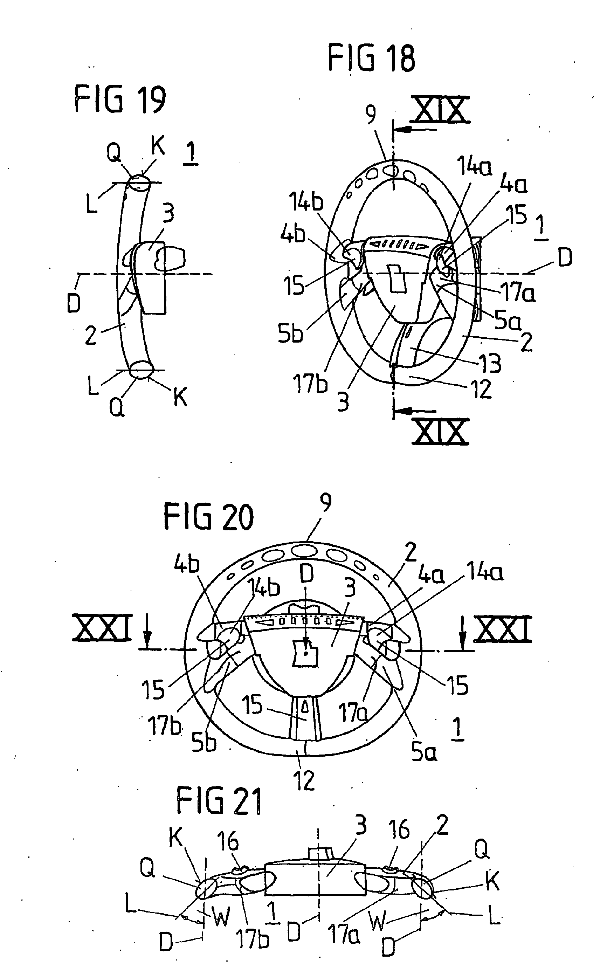

Figur 18 zeigt im Zusammenhang mit den Figuren 19 bis 21 und den Figuren 26 bis 26C eine weitere Abwandlung des in der Figur 1 bzw. 12 gezeigten Lenkrades 1, wobei im Unterschied zu den Figuren 1 und 12 insgesamt fünf Speichen zum Verbinden des Nabenkörpers 3 mit dem Lenkradkranz 2 vorgesehen sind, und zwar zwei erste Speichen 4a, 4b die sich gemäß der Figur 1 entlang der Fahrzeugquerachse y erstrecken und zwei entlang der vertikalen Fahrzeugachse z darunter angeordnete zweite Speichen 5a, 5b, die wie bei dem in der Figur 1 gezeigten Lenkrad 1 zu beiden Seiten des Nabenkörpers 3 vom Nabenkörper 3 abgehen, wobei eine Beabstandung zu der jeweils entlang der vertikalen Fahrzeugachse z oberhalb angeordneten ersten Speiche 4a, 4b in Richtung des Lenkradkranzes 2 hin zunimmt. Ein dritte Speiche 13 verbindet den Nabenkörper 3 gemäß der Figur 12 mit dem untersten Bereich 12 des Lenkradkranzes 2 des Lenkrades 1.

Bei der vorstehenden Ausführungsform des Lenkrades 1 dienen die Speichen 4a, 4b, 5a, 5b, und 13 nicht nur als Verbindungsglied zwischen Nabenkörper 3 und Lenkradkranz 2, sondern auch als Träger von Funktionselementen des Lenkrades 1. Hierbei ist an den beiden ersten Speichen 4a, 4b, die in entgegen gesetzten Richtungen vom Nabenkörper 3 abstehen und sich jeweils entlang einer im Wesentlichen parallel zur Fahrzeugquerachse y verlaufenden Längserstreckungsrichtung erstrecken, jeweils ein Betätigungshebel 14a, 14b vorgesehen, die spiegelsymmetrisch ausgebildet sind und jeweils entlang der Längserstreckungsrichtung zwischen dem Nabenkörper 3 und dem Lenkradkranz 2 an der ersten Speiche 4a bzw. der weiteren ersten Speiche 4b um deren Längserstreckungsrichtungen schwenkbar gelagert sind. Die beiden Betätigungshebel 14a, 14b stehen jeweils von der ersten Speiche 4a bzw. der weiteren ersten Speiche 4b in Richtung eines Bodens des Kraftfahrzeuges, in das das Lenkrad 1 eingebaut ist, ab und weisen jeweils zwei parallel zueinander verlaufende Hebelarme 15, 16 auf. Hierbei ist ein entlang der Lenkachse D einem Fahrer zugewandter erster Hebelarm 15 dazu eingerichtet und vorgesehen, per Daumendruch entlang der Lenkachse D betätigt zu werden (Druckrichtung vom Fahrer weg weisend), während ein zweiter von einem Fahrer aus betrachtet hinter dem ersten Hebelarm 15 verlaufender Hebelarm 16, der sich parallel zum ersten Hebelarm 15 erstreckt, dazu ausgebildet ist, mittels der ersten Fingerglieder der übrigen Finger einer Hand eines Fahrers entlang der Lenkachse D in Richtung des Fahrers betätigt zu werden. Derartige Betätigungshebel 14a, 14b, sind insbesondere für Schaltvorgänge während des Fahrbetriebes geeignet.

Weiterhin ist in die beiden zweiten Speichen 5a, 5b jeweils ein Drehauswahlschalter 17a, 17b integriert, die um die jeweilige Längserstreckungsrichtung der zweiten Speichen 5a, 5b, in die sie integriert sind, drehbar gelagert sind. Die beiden Drehauswahlschalter 17a, 17b weisen dabei jeweils eine die jeweilige Drehachse umlaufende Betätigungsoberfläche 18a, 18b auf, über die die Drehauswahlschalter 17a, 17b manuell betätigbar sind, z.B. durch ein Drehen der Drehauswahlschalter 17a, 17b mittels der Daumenkuppen eine Fahrers, wobei die Betätigungsoberflächen 18 eine Beabstandung zum Lenkradkranz 2 entlang der zweiten Speichen 5a, 5b derart aufweisen, dass ein Betätigen der Betätigungsoberflächen 18 möglich ist, ohne dass die Hände 10 des Fahrer vom Lenkradkranz 2 genommen werden müssen. Die Drehauswahlschalter 17a, 17b sind vorzugsweise derart in die zweiten Speichen 5a, 5b eingelassen, dass sie nicht quer zu den Längserstreckungsrichtungen der zweiten Speichen 5a, 5b von diesen abstehen. Hierdurch werden verletzungsträchtige und die Handhabung des Lenkrades 1 behindernde Vorsprünge vorteilhaft vermieden. Die beiden Drehauswahlschalter 17a, 17b sind hinsichtlich ihrer Funktion variabel belegbar und können beispielsweise zum Bedienen eines Navigationssystems eines Kraftfahrzeuges oder zur Aktivierung, Deaktivierung und Regelung sonstiger Komponenten einer Kraftfahrzeugausstatturig verwendet werden.

Während sowohl die ersten als auch die zweiten Speichen 4a, 4b, 5a, und 5b an jeweils einem an den Nabenkörper 3 angrenzenden Bereich senkrecht zur jeweiligen Längserstreckungsrichtung der betrachteten Speiche vorzugsweise einen kreisförmigen Querschnitt aufweisen, weisen die ersten Speichen 4a bzw. 4b in den an den Lenkradkranz 2 angrenzenden ersten Bereichen 6a, 6b, die sich entlang der Fahrzeugquerachse y einander gegenüberliegen, jeweils einen senkrecht zu den Längserstreckungsrichtungen der ersten Speiche 4a, 4b orientierten Querschnitt Q' mit einer ovalförmigen Querschnittskontur K' auf, deren Längsachse L' mit einer parallel zur Lenkachse D verlaufenden Achse D' einen zweiten Winkel W' von vorzugsweise 22,5° bildet. Hierdurch weisen die Längsachsen L' der Querschnittkonturen K' der ersten Speichen 4a, 4b an den ersten Bereichen 6a, 6b des Lenkradkranzes 2, an denen die ersten Speichen 4a, 4b in den Lenkradkranz 2 übergehen, eine Neigung in Bezug auf die Lenkachse D auf, die ein bequemes Ablegen der Daumen 7 eines Fahrers auf den ersten Speichen 4a, 4b ermöglicht.

Demgegenüber weisen die zweiten Speichen 5a, 5b in jeweils an den Lenkradkranz 2 angrenzenden zweiten Bereichen 6c, 6d, an denen die zweiten Speichen 5a; 5b in den Lenkradkranz 2 münden, senkrecht zur Längserstreckungsrichtung der zweiten Speichen 5a, 5b orientierte Querschnitte Q" mit jeweils länglich ausgebildeten Querschnittskonturen K" auf, die jeweils eine Längsachse L" aufweisen, die mit einer parallel zur Lenkachse D verlaufenden Achse D' einen dritten Winkel W" von vorzugsweise 45° einschließt. Dies ermöglicht einem Fahrer ebenfalls eine bequeme Ablage seiner Daumen 7 auf den zweiten Speichen 5a, 5b des Lenkrades 1, wobei dem Fahrer zusätzlich eine bequeme Bedienung der in die zweiten Speichen 5a, 5b integrierten Drehauswahlschalter 17a, 17b mittels seiner Daumen 7 ermöglicht wird, bei der diese zum Drehen der Drehauswahlschalter 17a, 17b eine ergonomisch günstige Abwärtsbewegung aus ihrer Ablageposition zum Fahrer hin vollführen.

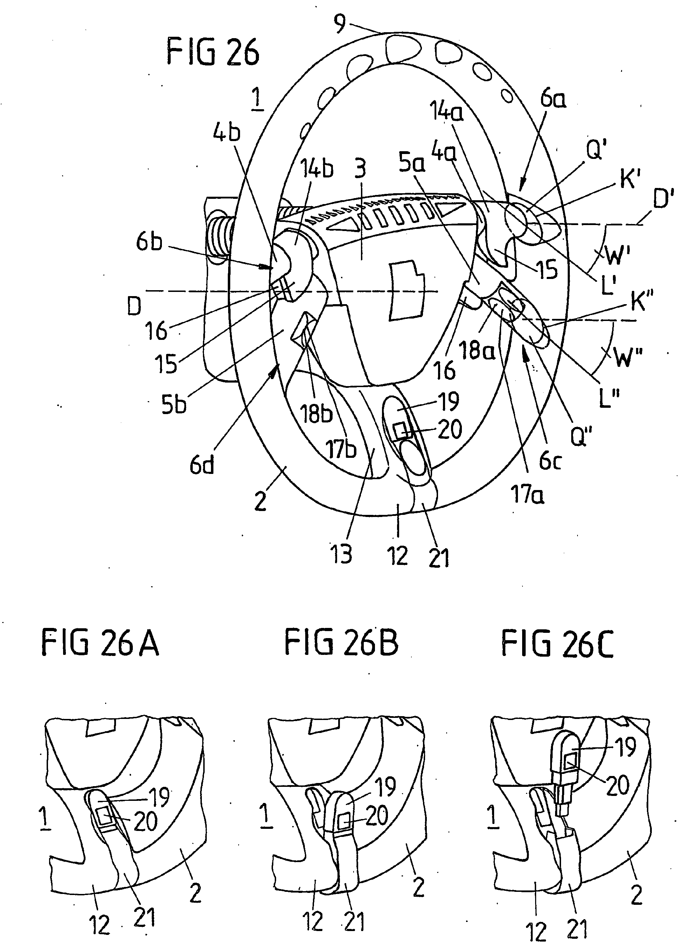

Gemäß den Figuren 26 bis 26C dient die dritte Speiche 13 eines Lenkrades 1 der in.der Figur 12 bzw. Figur 18 gezeigten Art als ein Träger eines lösbar an der dritten Speiche 13 befestigbaren Speichermittels 19, das z.B. als ein USB-Memorystick ausgebildet sein kann. Das Speichermittel 19 weist in einem an die dritte Speiche 13 festgelegten Zustand eine einem Fahrer zugewandte Funktionsoberfläche 20 auf, über die das Speichermittel 19 bedienbar ist. Vorzugsweise dient das Speichermittel , 19 zum Speichern personenbezogener Daten, die Parameter von Komfort- und Sicherheitseinrichtungen eines Kraftfahrzeuges darstellen. Weiterhin können Komponenten einer Kraftfahrzeugausstattung über das Speichermittel 19 aktiviert, deaktiviert und geregelt werden.

In seinem an der dritten Speiche 13 festgelegten Zustand ist das Speichermittel 19 über einen Schnittstelle (USB oder eine andere vergleichbare Schnittstelle) mit dem Lenkrad 1 verbunden und kann über diese Schnittstelle Informationen mit Komponenten einer Kraftfahrzeugausstattung austauschen bzw. diese steuern.

Die Schnittstelle befindet sich in einer aus der dritten Speiche 13 herausschwenkbaren Halterung 21. Diese weist eine Aussparung zur vorzugsweise formschlüssigen Aufnahme eines Endbereiches des Speichermittels 19 auf, mit einer Einstecköffnung, die eine Einsteckrichtung aufweist, entlang derer der Endbereich des Speichermittels 19 in die Aussparung- der Halterung 21 gesteckt wird, um das Speichermittel 19 mit der Schnittstelle zu kontaktieren. Nach erfolgter Kontaktierung wird die Halterung 21 mit samt dem Speichermittel 19 in Richtung der dritten Speiche 13 zurückgeschwenkt. Hierbei wird die Halterung 21 und das in der Halterung 21 befindliche Speichermittel 19 in der dritten Speiche 13 versenkt.

Figur 22 zeigt im Zusammenhang mit Figur 23 bis Figur 25 ein Lenkrad 1 der aus der Figur 12 bekannten Art, das austauschbare Abschnitte A des Lenkradkranzes 2 vorsieht, die sich gemäß der Figur 22 entlang der Umfangsrichtung U des Lenkradkranzes 2 erstrecken, und zwar jeweils von einem ersten Bereich 6a des Lenkradkranzes 2, an dem die ersten Speichen 4a, 4b in den Lenkradkranz 2 übergehen, zum untersten Bereich 12 des Lenkradkranzes 2, von dem die dritte Speiche 13 in Richtung des Nabenkörpers 3 absteht. Solche lösbaren Abschnitte A können durch jeweils ein erstes und ein zweites Schalenelement 22, 23 gebildet sein, die an einem Lenkradkranzskelett 24 als einem Grundkörper des Lenkradkranzes 2 festlegbar sind. Die beiden Schalenelemente 22, 23 können beispielsweise mittels Rastverbindungen am Lenkradkranzskelett 24 festgelegt werden und weisen jeweils eine flache Seite mit einer Ausnehmung zur Aufnahme eines Abschnittes des Lenkradkranzskeletts 24 auf, wobei in einem an dem Lenkradkranzskelett 24 befestigten Zustand die beiden flachen Seiten der Schalenelemente 22, 23 aneinander anliegen, so dass der Abschnitt des Lenkradkranzskeletts 24, an dem entlang sich die Schalenelemente 22, 23 in ihrem an, das Lenkradkranzskelett 24 befestigten Zustand erstrecken, von den beiden Schalenelementen 22, 23 eingeschlossen wird. '

Weiterhin können solche Abschnitte A eines Lenkradkranzes 2 derart am Lenkradkranzskelett 24 gelagert sein, dass der erste Winkel W, den die Längsachse L der Querschnittskontur K eines senkrecht zur Umfangrichtung U des Lenkradkranzes 2 orientierten Querschnitts Q des Abschnittes A mit der Lenkachse D bildet, variabel einstellbar ist, d.h., der Abschnitt A ist entlang einer die Querschnittskontur K umlaufenden Drehrichtung S drehbar ausgebildet, wobei der Abschnitt A zumindest zwischen zwei Stellungen, d.h., ersten Winkeln W, hin und her verstellbar ist. Hierzu darf eine Krümmung des Abschnittes A entlang der Umfangsrichtung U im Falle eines nicht flexiblen Materials des verstellbaren Abschnitts A nicht zu stark ausfallen. Ggf. können flexible Verbindungsglieder einzelne kürzere Abschnitte A der vorstehenden Art miteinander entlang der Umfangsrichtung U zu einem entsprechend längeren verstellbaren Abschnitt A des Lenkradkranzes 2 verbinden. Alternativ dazu können natürlich mehrere Abschnitte A des Lenkradkranzes 2 unabhängig voneinander verstellbar sein. Natürlich können auch an den Lenkrädern 1 der in den Figuren 1 und 18 beschriebene Art austauschbare bzw. verstellbare Abschnitte A eines Lenkradkranzes 2 vorgesehen werden.

## Patentansprüche

1. Lenkrad für ein Kraftfahrzeug, das um eine Lenkachse drehbar am Kraftfahrzeug lagerbar ist, mit
- einem Lenkradkranz zum Betätigen des Lenkrades, der sich entlang einer die Lenkachse umlaufenden Umfangsrichtung erstreckt und einen sich entlang der Umfangsrichtung verändernden Querschnitt aufweist, wobei
- zur Veränderung des Querschnittes (Q) zumindest entlang eines Teiles des Lenkradkranzes (2) die räumliche Orientierung einer vorgegebenen Querschnittskontur (K) entlang der Umfangsrichtung (U) in Bezug auf die Lenkachse (D) variiert.
**dadurch gekennzeichnet, dass**
- die Querschnittskontur (K) als eine längliche, geschlossene Kontur mit einer Längsachse (L) ausgebildet ist, und
- die Längsachse (L) der Querschnittskontur (K) in einer Geradeausfahrtstellung des Lenkradkranzes (2) - bezogen auf einen in ein Kraftfahrzeug eingebauten Zustand des Lenkrades (1) - einen ersten Winkel (W) mit der Lenkachse (D) einschließt, der abhängig von der Lage der Querschnittskontur (K) entlang des Lenkradkranzes (2), ausgehend von einem obersten Bereich (9) des Lenkradkranzes (2), entlang des Lenkradkranzes (2) anwächst, bis er - etwa auf einer halben Höhe zwischen dem obersten und einem untersten Bereich (9, 12) des Lenkradkranzes (2) - einen maximalen Wert erreicht.

2. Lenkrad nach Anspruch 1, **dadurch gekennzeichnet, dass** die räumliche Orientierung der Querschnittskontur (K) lediglich entlang eines Teiles des Lenkradkranzes (2) variiert.

3. Lenkrad nach Anspruch 1 oder 2, **dadurch gekennzeichnet, dass** die räumliche Orientierung der Querschnittskontur (K) entlang des Lenkradkranzes (2) bis auf solche Bereiche des Lenkradkranzes (2) variiert, an denen Speichen (4a, 4b, 5a, 5b, 13) des Lenkrades (1) in den Lenkradkranz (2) münden.

4. Lenkrad nach Anspruch 1, **dadurch gekennzeichnet, dass** die räumliche Orientierung der Querschnittskontur (K) entlang des gesamten Lenkradkranzes (2) variiert.

5. Lenkrad nach einem der vorangegangenen Ansprüche, **dadurch gekennzeichnet, dass** die Orientierung der Querschnittskontur (K) entlang der Umfangsrichtung (U) des Lenkradkranzes (2) kontinuierlich variiert.

6. Lenkrad nach einem der vorangegangenen Ansprüche, **dadurch gekennzeichnet, dass** die räumliche Orientierung der Querschnittskontur (K) bei konstanter Querschnittskontur (K) entlang der Umfangsrichtung (U) des Lenkradkranzes (2) variiert.

7. Lenkrad nach einem der vorangegangenen Ansprüche, **dadurch gekennzeichnet, dass** die räumliche Orientierung der Querschnittskontur (K) bei konstanter Fläche des Querschnitts (Q) entlang der Umfangsrichtung (U) des Lenkradkranzes (2) variiert.

8. Lenkrad nach einem der vorhergehenden Ansprüche, **dadurch gekennzeichnet, dass** der erste Winkel (W) ausgehend von seinem maximalen Wert, den er etwa auf halber Höhe zwischen dem obersten und dem untersten Bereich (9, 12) des Lenkradkranzes (2) annimmt, entlang der Umfangsrichtung (U) zum untersten Bereich (12) des Lenkradkranzes (2) hin abnimmt.

9. Lenkrad nach einem der vorhergehenden Ansprüche, **dadurch gekennzeichnet, dass** der Lenkradkranz (2) am obersten Bereich (9) des Lenkradkranzes (2) eine Querschnittskontur (K) aufweist, deren Längsachse (L) mit der Lenkachse (D) einen ersten Winkel (W) von 0° bildet.

10. Lenkrad nach einem der vorhergehenden Ansprüche **dadurch gekennzeichnet, dass** der Lenkradkranz (2) am untersten Bereich (12) des Lenkradkranzes (2) eine Querschnittskontur (Q) aufweist, deren Längsachse (L) mit der Lenkachse (D) einen ersten Winkel (W) von 0° bildet.

11. Lenkrad nach einem der vorhergehenden Ansprüche, **dadurch gekennzeichnet, dass** der Lenkradkranz (2) auf der halben Höhe zwischen dem obersten und dem untersten Bereich (9, 12) eine Querschnittskontur (K) aufweist, deren Längsachse (L) mit der Lenkachse (D) einen ersten Winkel (W) von 45° bildet.

12. Lenkrad nach einem der vorangegangenen Ansprüche, **dadurch gekennzeichnet, dass** der Lenkradkranz (2) die Lenkachse (D) in sich geschlossen umläuft.

## Claims

1. Steering wheel for a motor vehicle which may be rotatably mounted on the motor vehicle about a steering axis, with
- a steering wheel rim for actuating the steering wheel which extends in a peripheral direction surrounding the steering axis, and has a cross section altering in the peripheral direction, wherein
- for altering the cross section (Q) at least along a part of the steering wheel rim (2), the spatial orientation of a predetermined cross-sectional contour (K) varies in the peripheral direction (U) relative to the steering axis (D),
**characterized in that**
- the cross-sectional contour (K) is configured as an elongate, enclosed contour with a longitudinal axis (L), and
- the longitudinal axis (L) of the cross-sectional contour (K) in a straight-ahead driving position of the steering wheel rim (2) - relative to when the steering wheel (1) is installed in a motor vehicle - encloses a first angle (W) with the steering axis (D) which, depending on the position of the cross-sectional contour (K) along the steering wheel rim (2), increases from an uppermost region (9) of the steering wheel rim (2), along the steering wheel rim (2), until it reaches a maximum value - approximately half way between the uppermost and a lowermost region (9, 12) of the steering wheel rim (2).

2. Steering wheel according to Claim 1, **characterized in that** the spatial orientation of the cross-sectional contour (K) only varies along one part of the steering wheel rim (2).

3. Steering wheel according to Claim 1 or 2, **characterized in that** the spatial orientation of the cross-sectional contour (K) varies along the steering wheel rim (2) as far as such regions of the steering wheel rim (2) at which spokes (4a, 4b, 5a, 5b, 13) of the steering wheel (1) run into the steering wheel rim (2).

4. Steering wheel according to Claim 1, **characterized in that** the spatial orientation of the cross-sectional contour (K) varies along the entire steering wheel rim (2).

5. Steering wheel according to one of the preceding claims, **characterized in that** the orientation of the cross-sectional contour (K) continuously varies in the peripheral direction (U) of the steering wheel rim (2).

6. Steering wheel according to one of the preceding claims, **characterized in that** the spatial orientation of the cross-sectional contour (K) varies when the cross-sectional contour (K) is uniform in the peripheral direction (U) of the steering wheel rim (2).

7. Steering wheel according to one of the preceding claims, **characterized in that** the spatial orientation of the cross-sectional contour (K) varies when the surface of the cross section (Q) is uniform in the peripheral direction (U) of the steering wheel rim (2).

8. Steering wheel according to one of the preceding claims, **characterized in that** the first angle (W) decreases from its maximum value which it adopts approximately half way between the uppermost and the lowermost region (9, 12) of the steering wheel rim (2), in the peripheral direction (U) towards the lowermost region (12) of the steering wheel rim (2).

9. Steering wheel according to one of the preceding claims, **characterized in that** the steering wheel rim (2) at the uppermost region (9) of the steering wheel rim (2) has a cross-sectional contour (K), of which the longitudinal axis (L) forms a first angle (W) of 0° with the steering axis (D).

10. Steering wheel according to one of the preceding claims, **characterized in that** the steering wheel rim (2) has a cross-sectional contour (Q) at the lowermost region (12) of the steering wheel rim (2), of which the longitudinal axis (L) forms a first angle (W) of 0° with the steering axis (D).

11. Steering wheel according to one of the preceding claims, **characterized in that** the steering wheel rim (2) half way between the uppermost and lowermost region (9, 12) has a cross-sectional contour (K) of which the longitudinal axis (L) forms a first angle (W) of 45° with the steering axis (D).

12. Steering wheel according to one of the preceding claims, **characterized in that** the steering wheel rim (2) surrounds the steering axis (D) in a manner which is intrinsically closed.

## Revendications

1. Volant pour un véhicule, qui peut être monté de façon rotative autour d'un axe de direction sur le véhicule, comportant
- une couronne de volant pour l'actionnement du volant, qui s'étend le long d'une direction périphérique entourant l'axe de direction et présente une section transversale changeante le long de la direction périphérique, moyennant quoi
- pour faire changer la section transversale (Q) au moins le long d'une partie de la couronne du volant (2), l'orientation spatiale d'un contour de section transversale (K) préétabli varie le long de la direction périphérique (U) par rapport à l'axe de direction (D),
**caractérisé en ce que**
- le contour de section transversale (K) est conçu sous forme d'un contour fermé oblong, avec un axe longitudinal (L), et
- l'axe longitudinal (L) du contour de section transversale (K) dans une position de conduire tout droit de la couronne de volant (2) - par rapport à un état incorporé dans un véhicule automobile du volant (1) - inscrit un premier angle (W) avec l'axe de direction (D) qui, en fonction de la position du contour de section transversale (K) le long de la couronne du volant (2), en partant d'une région supérieure extrême (9) de la couronne de volant (2), augmente le long de la couronne de volant (2), jusqu'à ce - sensiblement à mi-hauteur entre la région supérieure extrême et la région inférieure extrême (9, 12) de la couronne de volant (2) - il atteigne une valeur maximale.

2. Volant selon la revendication 1, **caractérisé en ce que** l'orientation spatiale du contour de section transversale (K) varie uniquement le long d'une partie de la couronne de volant (2).

3. Volant selon la revendication 1 ou la revendication 2, **caractérisé en ce que** l'orientation spatiale du contour de section transversale (K) varie le long de la couronne de volant (2) jusqu'aux régions de la couronne de volant (2), dans lesquelles les rayons (4a, 4b, 5a, 5b, 13) du volant (1) aboutissent dans la couronne de volant (2).

4. Volant selon la revendication 1, **caractérisé en ce que** l'orientation spatiale du contour de section transversale (K) varie le long de la totalité de la couronne de volant (2).

5. Volant selon l'une des revendications précédentes, **caractérisé en ce que** l'orientation du contour de section transversale (K) varie le long de la direction périphérique (U) de la couronne de volant (2) de façon continue.

6. Volant selon l'une des revendications précédentes, **caractérisé en ce que** l'orientation spatiale du contour de section transversale (K) varie pour un contour de section transversale constant (K) le long de la direction périphérique (U) de la couronne de volant (2).

7. Volant selon l'une des revendications précédentes, **caractérisé en ce que** l'orientation spatiale du contour de section transversale (K) varie pour une surface constante de la section transversale (K) le long de la direction périphérique (U) de la couronne de volant (2).

8. Volant selon l'une des revendications précédentes, **caractérisé en ce que** le premier angle (W), en partant de sa valeur maximum qu'il prend sensiblement à mi-hauteur entre la région supérieure extrême et la région inférieure extrême (9, 12) de la couronne de volant (2), diminue le long de la direction périphérique (U) jusqu'à la région inférieure extrême (12) de la couronne de volant (2).

9. Volant selon l'une des revendications précédentes, **caractérisé en ce que** la couronne de volant (2) présente, sur la région supérieure extrême (9) de la couronne de volant (2), un contour de section transversale (K) dont l'axe longitudinal (L) forme, avec l'axe de direction (D), un premier angle (W) de 0°.

10. Volant selon l'une des revendications précédentes, **caractérisé en ce que** la couronne de volant (2), sur la région inférieure extrême (12) de la couronne de volant (2), présente un contour de section transversale (Q) dont l'axe longitudinal (L) forme, avec l'axe de direction (D), un premier angle (W) de 0°.

11. Volant selon l'une des revendications précédentes, **caractérisé en ce que** la couronne de volant (2), à mi-hauteur entre la région supérieure extrême et la région inférieure extrême (9, 12), présente un contour de section transversale (K) dont l'axe longitudinal (L) forme, avec l'axe de direction (D), un premier angle (W) de 45°.

12. Volant selon l'une des revendications précédentes, **caractérisé en ce que** la couronne de volant (2) entoure et renferme l'axe de direction (D).
